# EUROPÄISCHE PATENTSCHRIFT

(11) **EP 1 394 431 B1**
(45) Veröffentlichungstag und Bekanntmachung des Hinweises auf die Patenterteilung: **09.11.2011**
(21) Anmeldenummer: 03019952.5
(22) Anmeldetag: 02.09.2003
(51) Int. Cl.: F16D 3/74

(54) **Vorrichtung zur Übertragung von Drehmomenten zwischen zwei Maschinenteilen**
Device for transmitting a torque between two parts of machinery
Dispositif de transmission de couple entre deux pièces de machine

(30) Priorität: 02.09.2002 DE 20213666 U
(43) Veröffentlichungstag der Anmeldung: 03.03.2004
(73) Patentinhaber: Centa-Antriebe Kirschey GmbH, 42781 Haan (DE)
(72) Erfinder: Kirschey, Gerhard, Dipl.-Ing., 42329 Wuppertal (DE)
(74) Vertreter: Ostriga, Sonnet, Wirths & Roche

(56) Entgegenhaltungen:
- WO-A-96/15385
- DE-C- 4 442 268
- DE-U1- 9 206 358
- FR-A- 2 564 538

## Beschreibung

Die Erfindung betrifft eine Vorrichtung zur Übertragung von Drehmomenten zwischen zwei Maschinenteilen gemäß dem Oberbegriff des Anspruches 1.

Derartige Vorrichtungen sind bekannt und weit verbreitet. Man bezeichnet derartige Vorrichtungen zur Drehmomentübertragung im weitesten Sinne auch als Kupplungen, wobei die Kupplung gemäß dem Oberbegriff des Anspruches 1 eine sogenannte Membran-Kupplung beschreibt. Typischerweise weisen derartige Membran-Kupplungen einen Flanschabschnitt auf, der insbesondere kreisringscheibenförmig ausgebildet ist. Der Flanschabschnitt weist einen ersten Kraftankopplungsbereich auf, z. B. eine Krafteinleitungsstelle, die mit der Antriebsseite der Kupplung verbunden ist. Ein zweiter Kraftankopplungsbereich, also eine Kraftausleitungsstelle, ist dementsprechend mit der Abtriebsseite der Kupplung verbunden. Die beiden Kraftankopplungsbereiche können beispielsweise von einer Mehrzahl, in Umfangsrichtung des Flanschabschnittes angeordneter gesonderter Befestigungselemente, wie z.B. Schrauben, gebildet sein. Alternativ kann auch vorgesehen sein, dass der Flanschabschnitt über den Kraftankopplungsbereich durch eine Klebung, eine Verschweißung oder ein sonstiges geeignetes Befestigungsmittel mit dem Maschinenteil verbunden ist.

Die Membran-Kupplungen finden üblicherweise Verwendung im Bereich der Bootsantriebe sowie bei Windkraftmaschinen und können dementsprechend große Drehmomente übertragen. Auf derartige Anwendungsgebiete ist die vorliegende Erfindung jedoch nicht beschränkt.

Wenn zwei Maschinenteile, zwischen denen Drehmomente übertragen werden, auf geeignete Weise miteinander verbunden werden sollen, ist zu berücksichtigen, dass bei besonderen Anwendungsfällen oder bestimmten Einsatzorten aufgrund von starken Vibrationen der Maschinenteile, oder aufgrund von großen, äußeren, auf die Maschinenteile einwirkenden Kräften eine gewisse Beweglichkeit erforderlich ist. Membran-Kupplungen sorgen in solchen Fällen für eine Winkelbeweglichkeit zwischen dem ersten und dem zweiten Kraftankopplungsbereich, so dass ein erstes, z.B. antriebsseitiges Maschinenteil relativ zu einem zweiten, z.B. abtriebsseitigen Maschinenteil zumindest geringfügig winkelbeweglich ist.

Gleichermaßen wird zwischen den beiden Maschinenteilen entsprechend auch eine gewisse Axialbeweglichkeit erreicht, die in einer Axialbeweglichkeit der beiden Kraftankopplungsbereiche relativ zueinander begründet ist.

Üblicherweise kann mit einer bekannten Vorrichtung zur Übertragung von Drehmomenten gemäß dem Oberbegriff des Anspruches 1 auch für einen Ausgleich von Radialversätzen zwischen den beiden Wellen zweier Maschinenteile durch eine Doppelanordnung mindestens zweier Membran-Kupplungen gesorgt werden. Ein derartiger Radialversatz kann beispielsweise auch aufgrund eines Montagespiels der beiden Maschinenteile auftreten.

Gleichermaßen ist es auch bekannt, zwei Paare von Membran-Kupplungen durch eine serielle Anordnung zu einer doppelkardanischen Gelenkanordnung zusammenzufassen. Durch Mehrfachanordnung der Membran-Kupplungen wird die Winkelbeweglichkeit, und damit selbstverständlich auch die axiale Beweglichkeit der jeweiligen Kraftankopplungsbereiche entsprechend vervielfacht.

Beispiele für die gattungsgemäßen elastischen, drehstarren Kupplungen gemäß dem Oberbegriff des Anspruches 1 sind u.a. in dem Kupplungsatlas von A. Schalitz, 3. Auflage, A.G.T.-Verlag Georg Thun, S. 18 - 23, beschrieben. Die Drehmomente werden bei sämtlichen dort dargestellten Ausführungsbeispielen über metallische Glieder übertragen, die sich zwar in Drehrichtung wie starre Glieder verhalten, aber biegeelastisch sind, so dass ein Ausgleich von Verlagerungen der Wellen der Maschinenteile durch Verformung der Übertragungsglieder möglich wird.

Als Material für die verformbaren Übertragungsglieder wird insbesondere Vergütungsstahl vorgeschlagen.

Darüber hinaus sind Kupplungselemente bekannt, die aus faserverstärkten Verbundstoffen mit unidirektionalen oder nicht unidirektionalen Verstärkungen, wie Vliesen und Gelegen, Matten, Geweben, Rovinggeweben, Kombinations- und Mischverstärkungen, bestehen. Beispielhaft wird in diesem Zusammenhang auf die US-A 5 551 918 hingewiesen, die vorzugsweise die Verwendung eines Rovinggewebes vorschlägt, welches mit L-42 Adipren getränkt ist.

Die EP 0 331 365 gibt in ihrer Beschreibungseinleitung einen guten Überblick über die Entwicklung der Materialien zur Verwendung in Kupplungselementen. Bereits hieraus wird deutlich, dass die Materialwahl für den Flanschabschnitt aufgrund der besonderen Beanspruchungen eines solchen Kupplungselementes und dessen dauerhaften Einsatz nicht trivial ist.

Aus der DE 92 06 358 U1, die auf die Anmelderin zurückgeht, geht eine drehelastische Kupplung hervor, bei der ein gummielastischer Zwischenring als Spritzgieß-Formkörper aus einem gummielastische Eigenschaften aufweisenden Kunststoff, insbesondere Polyurethan mit einer Härte von vorzugsweise unter 75 Shore A. Aus dieser Schrift geht keine gattungsgemäße elastische drehstarre Kupplung hervor.

Sämtliche bekannten gattungsgemäßen Vorrichtungen zur Übertragung von Drehmomenten haben, soweit sie aus Kunststoff bestehen, folgende Gemeinsamkeit: Die Membran-Kupplung wird üblicherweise dadurch hergestellt, dass ein Verstärkungselement, üblicherweise eine Glasfasermatte, oder eine Tafel aus vorgetränktem Werkstoff (pre-pregs), in eine entsprechende Form eingebracht wird und mit einem entsprechenden Bindemittel getränkt wird. Nach dem Injizieren des Bindemittels, also beispielsweise eines Epoxy- oder Polyesterharzes, härtet das Kupplungsteil aus. Im fertigen Zustand wird die Drehmomentübertragung im wesentlichen durch die Glasfasermatten erreicht, wobei das ausgehärtete Bindemittel lediglich für eine Stützung sorgt.

und mit einem entsprechenden Bindemittel getränkt wird. Nach dem Injizieren des Bindemittels, also beispielsweise eines Epoxy- oder Polyesterharzes, härtet das Kupplungsteil aus. Im fertigen Zustand wird die Drehmomentübertragung im wesentlichen durch die Glasfasermatten erreicht, wobei das ausgehärtete Bindemittel lediglich für eine Stützung sorgt.

Der Erfindung liegt ausgehend von dem zuletzt geschilderten Stand der Technik die Aufgabe zugrunde, eine Vorrichtung gemäß dem Oberbegriff des Anspruches 1 derart weiterzubilden, dass sie einerseits die Möglichkeit einer vereinfachten Herstellung bietet, sowie andererseits eine verbesserte Einstellung ihrer physikalischen Eigenschaften ermöglicht.

Die Erfindung löst diese Aufgabe mit den Merkmalen des Anspruches 1, und ist demgemäß dadurch gekennzeichnet, dass der Flanschabschnitt ein durchgehend homogenes Werkstück darstellt, welches vollständig aus einem mittels eines Kunststoff-Spritzgießverfahrens bearbeitbaren Werkstoff besteht, und dass der Flanschabschnitt einstückig als Kunststoff-Spritzgussteil ausgebildet ist.

Das Prinzip der Erfindung besteht somit im wesentlichen darin, anstelle der im Stand der Technik vorgesehenen Verwendung eines gesonderten Stütz- oder Verstärkungselementes, also beispielsweise einer Glasfasermatte, die getränkt werden muss und mit einem Bindemittel, also beispielsweise einem Harz, zusammengebracht wird, nunmehr einen Werkstoff zu verwenden, der einen völlig homogenen Aufbau der fertigen Membrankupplung ermöglicht. Als Werkstoff wird dazu ein mittels eines Kunststoff-Spritzgießverfahrens bearbeitbarer Werkstoff gewählt, wobei die Herstellung des Flanschabschnittes auf denkbar einfache Weise als Kunststoff-Spritzgussteil erfolgt.

Durch die Verwendung eines Spritz-Gieß-Verfahrens als Herstellungsverfahren, welches im Stand der Technik an sich bekannt und auf völlig anderen Fachgebieten weit verbreitet ist, bei den gattungsgemäßen Vorrichtungen zur Drehmomentübertragung jedoch bisher nicht eingesetzt worden ist, ergibt sich eine besonders einfache und preiswerte Möglichkeit, Membran-Kupplungen herzustellen. Das gesonderte Anfertigen, Zubereiten und Einlegen eines Stützelementes, wie beispielsweise einer Glasfasermatte oder eines pre-pregs kann auf diese Weise entfallen. Der Flanschabschnitt ist somit sehr effizient, in einem einzigen Arbeitsgang herstellbar und kann in einer entsprechend hohen Taktzahl, preiswert, gefertigt werden.

Das Einlegen eines gesonderten Stützelementes in eine dafür vorgesehene Form, ein Arbeitsschritt, der bisher ausschließlich manuell durchführbar war, und daher sehr arbeitsaufwendig war, kann nunmehr vollständig entfallen. Das Einbringen der erhitzten Formmasse in die für den zu erstellenden Flanschabschnitt vorgesehene Form kann erfindungsgemäß vollautomatisch erfolgen. Nach einer kurzen Abkühlung, die zur Erstarrung des als Spritzgussteil ausgebildeten Flanschabschnittes erforderlich ist, kann der Flanschabschnitt darüber hinaus automatisch von einem Auswerfer aus der Form herausbefördert werden.

Durch die vollständig homogene Ausbildung des Flanschabschnittes, die erst dadurch möglich wird, dass ein gesondertes Stützelement entfällt, kann die Membran-Kupplung bezüglich ihres Anwendungszweckes auf einfache Weise optimal ausgelegt werden. Beispielsweise kann die geometrische Form des Flanschabschnittes nachfolgend einer Computersimulation beliebig gewählt werden, wobei aufgrund der durchgehenden Homogenität des Flanschabschnittes besonders dünne Wandstärken möglich sind, was zu einer Material- und Gewichtsersparnis führen kann.

Die beim Stand der Technik zwangsläufig vorhandenen und zu beachtenden Mindestwandstärken des Werkstückes, die bereits aufgrund der geometrischen Ausdehnung der Stützelemente eine Rolle spielen, weil die Stützelemente beispielsweise vor-durchtränkt waren und außerdem von dem Bindemittel beidseitig umfasst sein mussten, können mit der erfindungsgemäßen Membran-Kupplung unterboten werden. Hierdurch sind völlig neue geometrische Formen des Werkstückes möglich.

Schließlich sind die physikalischen Eigenschaften der erfindungsgemäßen Membran-Kupplung auch insoweit vorzuziehen, als dass die besonders homogene Ausbildung des Flanschabschnittes für sehr gleichmäßige Kraftverteilungen innerhalb des Flanschabschnittes sorgt. Während beim Stand der Technik in Bereichen, in denen aufgrund unvermeidbarer Produktionsungenauigkeiten kein Bindematerial in das Stützelement gelangen konnte, und sich auf diese Weise auch Werkstoffbereiche ausbilden konnten, in denen im Verhältnis zu dem dort vorhandenen Stützelement nur wenig, vielleicht zuwenig Bindematerial vorhanden war, ist nunmehr gewährleistet, dass der Flanschabschnitt nachprüfbar durchgehend homogen ausgebildet ist.

Außerdem besteht erfindungsgemäß nun auch die Möglichkeit, die Kraftankopplungsbereiche, sowie beispielsweise, falls vorgesehen, auch Ausnehmungen im Flanschabschnitt, unmittelbar mit einzuarbeiten, ohne dass eine spätere Nachbearbeitung des Werkstücks erforderlich wäre. Das Entfallen dieses Nachbearbeitungsschrittes hat darüber hinaus den Vorteil, dass die Gefahr vermieden wird, die Kupplung aufgrund eines nachfolgenden Bearbeitungsschrittes in ihrer Struktur zu schädigen.

Die erfindungsgemäße Ausbildung der Membran-Kupplung ist denkbar einfach. In langwierigen Belastungstests, bei denen auf die erfindungsgemäßen Membran-Kupplungen mehrere hunderttausend Lastwechsel simuliert wurden, hat sich die Belastbarkeit der erfindungsgemäßen Membran-Kupplung in überraschender Weise sehr bewährt.

Gemäß einer vorteilhaften Ausgestaltung der Erfindung besteht der Flanschabschnitt aus einem flexiblen, hoch belastbaren, zähen Kunststoff. Diese Ausführungsform ermöglicht die Herstellung eines Flanschabschnittes mit besonders vorteilhaften physikalischen Eigenschaften.

Vorteilhafterweise ist der Werkstoff nicht zu spröde und auch nicht zu weich ausgebildet. Vorteilhaft ist hingegen ein Werkstoff mit einer gewissen Schlagzähigkeit.

Gemäß einer weiteren vorteilhaften Ausgestaltung der Erfindung besteht der Flanschabschnitt aus Polyamid. Es kommt beispielsweise der unter der Bezeichnung Zytel 80G33HS1 L BK 104 PA66 (TP) im Handel erhältliche Kunststoff der Dupont Engineering Polymers in Betracht. Es handelt sich dabei um einen preiswerten, gut verarbeitbaren und die Anforderungen in hervorragender Weise erfüllenden Kunststoff.

Alternativ kommen die Werkstoffe Acetal, Polycarbonat oder Polyäthylen in Betracht.

Gemäß einer weiteren vorteilhaften Ausgestaltung der Erfindung ist der Werkstoff ein Kunststoff mit einem Zugmodul im Bereich von etwa 8.500 MPa gemäß ISO 527-1/-2. Ein derartiger Werkstoff ist im besonderen Maße zur Herstellung des Flanschabschnittes der erfindungsgemäßen Membran-Kupplung geeignet. Anzumerken ist, dass die Zahlenbereichsangabe für das Zugmodul naturgemäß nur der Orientierung dienen kann, und gewisse Abweichungen von dem vorgeschlagenen Wert möglich sind, von dem erfinderischen Gedanken jedoch mit umfasst sein sollen.

Die gleiche Anmerkung gilt selbstverständlich für die unten angegebenen Zahlenangaben bezüglich der Kerbschlagzähigkeiten, der Bruchspannungen, der Bruchdehnungen, der Schmelztemperaturen und der Dichte.

Gemäß einer vorteilhaften Ausgestaltung der Erfindung weist der Werkstoff eine Charpy-Kerbschlagzähigkeit im Bereich von etwa 18 kJ/m² bei 23°C gemäß ISO 179/1eA auf.

Gemäß einer vorteilhaften Ausgestaltung der Erfindung weist der Werkstoff eine Izod-Kerbschlagzähigkeit im Bereich von etwa 20 kJ/m² bei 23°C gemäß ISO 180/1A auf.

Gemäß einer vorteilhaften Ausgestaltung der Erfindung weist der Werkstoff eine Bruchdehnung von etwa 3,5 % gemäß ISO 527-1/-2 auf.

Gemäß einer vorteilhaften Ausgestaltung der Erfindung weist der Werkstoff eine Bruchspannung von etwa von etwa 135 MPa gemäß ISO 527-1/-2 auf.

Gemäß einer vorteilhaften Ausgestaltung der Erfindung weist der Werkstoff eine Schmelztemperatur im Bereich von 290-305 °C auf.

Gemäß einer vorteilhaften Ausgestaltung der Erfindung weist der Werkstoff eine Schmelztemperatur von etwa 263 °C gemäß ISO 11357-1/-3 auf.

Gemäß einer vorteilhaften Ausgestaltung der Erfindung weist der Werkstoff eine Dichte von etwa 1330 kg/m³ gemäß ISO 1183 auf.

Gemäß einer weiteren vorteilhaften Ausgestaltung der Erfindung ist der Werkstoff ein verstärkungsfaserfreier Kunststoff. Diese Ausführungsform erreicht eine nicht mehr zu übertreffende Homogenität des fertigen Flanschabschnittes, da dieser nur noch aus einem reinen Kunststoff besteht.

Gemäß einer weiteren vorteilhaften Ausgestaltung der Erfindung ist der Werkstoff ein Kunststoff, dem Verstärkungsfasern, insbesondere Kurzfasern, homogen verteilt beigemischt sind. Diese Ausführungsform ermöglicht das Herstellen eines vollständig homogen ausgestalteten Flanschabschnittes, wobei die Kurzfasern die physikalischen Eigenschaften der Membran-Kupplung positiv beeinflussen können. Durch Beimischung der Verstärkungsfasern, die insbesondere Kurzfasern sein können, in homogen verteilter Art, können diese gemeinsam mit dem Kunststoff mit in die Form eingespritzt werden. Die Verstärkungsfasern sind somit gemeinsam mit dem Werkstoff mittels eines Kunststoff-Spritz-Gieß-Verfahrens bearbeitbar, bilden somit einen Bestandteil der thermoplastischen Formmasse, die durch Heißkanäle in die endgültige Form für den Spritzling transportiert wird.

Die Faserlänge der Kurzfasern liegt beispielsweise in der Größenordnung von 0,5 mm.

Gemäß einer weiteren, besonders vorteilhaften Ausgestaltung der Erfindung ist wenigstens einer der beiden Kraftankopplungsbereiche, vorzugsweise beide Kraftankopplungsbereiche, einstückig stoffschlüssig an den Flanschabschnitt angeformt und als integraler Bestandteil des Werkstückes mit angespritzt. Diese Ausgestaltung der Erfindung bietet die Möglichkeit, die Kraftankopplungsbereiche auf besonders einfache Weise auszubilden sowie auch hier aufgrund der Homogenität des Flanschabschnittes für eine optimale Kraftverteilung innerhalb der Kraftankopplungsbereiche, sowie von den Kraftankopplungsbereichen zu dem Flanschabschnitt, und umgekehrt, zu sorgen. Hierdurch wird die Gefahr einer Beschädigung der Membran-Kupplung deutlich reduziert.

In besonderer Ausgestaltung der Erfindung kann vorgesehen sein, dass Aufnahmen, insbesondere metallische Buchsen, für Befestigungsmittel, die der Anbindung des Flanschabschnittes an ein Maschinenteil oder an ein weiteres Kupplungselement dienen, als integraler Bestandteil des Werkstückes mit umspritzt sind. Auch hierbei wird eine besonders günstige Kraftweiterleitung innerhalb der Membran-Kupplung erreicht.

Gemäß einer vorteilhaften Ausgestaltung der Erfindung ist dem radial inneren Kraftankopplungsbereich zur Befestigung der Vorrichtung an einem Maschinenteil ein Ringkörper zugeordnet, der als gesondertes, vorgefertigtes Bauteil ausgebildet ist. Durch diese Ausgestaltung der Erfindung wird bei Beibehaltung einer einfachen Bauweise auch eine einfache und sichere Befestigung des Flanschabschnittes an Maschinenteilen aus besonderen Materialen möglich.

Typischerweise sind zur Übertragung der Drehmomente relativ lang ausgebildete Wellen, insbesondere Hohlwellen, vorgesehen, die beispielsweise zwischen 8 und 20 Metern lang sein können. Eine Ausbildung dieser Bauelemente als Spritzgussteile kommt aufgrund der dafür erforderlichen enormen Dimensionen des Formwerkzeuges nicht in Frage. Als Material kommen Metall, insbesondere Stahl oder Aluminium, sowie Kunststoff, insbesondere Epoxidharze oder Phenolharze, in Betracht. Derartige aus Kunststoff bestehende Wellen werden typischerweise dadurch hergestellt, dass Bündel von Verstärkungsfasern, welche in Harz vorgetränkt sind, maschinell auf einer Wickelmaschine in einem bestimmten Wickelwinkel von z.B. 45° um einen Kern herumgewickelt werden. Anschließend wird die Welle in einem Ofen ausgehärtet. Auf diese Weise ist eine längenvariable Herstellung der Wellen möglich.

Die einfachste Befestigungsmöglichkeit besteht darin, den Flanschabschnitt mit der Welle zu verkleben. Hierbei sind insbesondere solche Ausführungsformen von Vorrichtungen vorteilhaft, die eine im wesentlichen trichterförmige Grundform aufweisen, also eine Form derart, dass die beiden Kraftankopplungsbereiche axial voneinander beabstandet sind und dem Flanschabschnitt ein zylindrisches, insbesondere kreiszylindrisches Anschlussstück zugeordnet ist, welches integraler Bestandteil des Werkstückes ist und mit angespritzt ist.

Da die Welle jedoch aus einem ersten Werkstoff besteht, beispielsweise aus geeigneten Harzen, und da das den Flanschabschnitt aufweisende Werkstück aus einem anderen Werkstoff besteht, nämlich aus einem im Kunststoffspritzgießverfahren bearbeitbaren Kunststoff, kann es hinsichtlich einer Verklebung zwischen Welle und Vorrichtung zu gewissen Problemen kommen.

Durch Anordnung eines gesonderten Ringkörpers, der als vorgefertigtes Bauteil in die Spritzgießform für den Flanschabschnitt einsetzbar ist, ist der Ringkörper von dem Werkstoff, der den Flanschabschnitt bildet, vollständig umspritzbar. Auf diese Weise wird der Flanschabschnitt unter Ausbildung einer einstückigen Baueinheit mit dem Ringkörper sicher verbunden. Zugleich wird durch die Innenumfangsfläche des Ringkörpers eine geeignete Kontaktfläche für den Klebstoff bereitgestellt, die eine einfache und dauerhaft sichere Verklebung mit der Welle gestattet. Insbesondere werden Ringkörper verwendet, die aus einem geeigneten Kunststoff oder aus Metall bestehen.

Gemäß einer weiteren vorteilhaften Ausgestaltung der Erfindung sind auf der Mantelfläche des Ringkörpers radiale Vorsprünge, insbesondere Rippen, angeordnet, so dass eine formschlüssige und damit besonders sichere Verbindung zwischen dem Flanschabschnitt und dem Ringkörper ermöglicht wird, die zugleich für eine optimierte Kraftleitung sorgen kann.

Gemäß einem weiteren Aspekt betrifft die Erfindung eine Kupplungsanordnung mit den Merkmalen des Anspruches 20.

Weitere Vorteile der Erfindung ergeben sich aus den nicht zitierten Unteransprüchen sowie anhand der nun folgenden Beschreibung mehrerer in den Figuren dargestellter Ausführungsbeispiele. Darin zeigen:
- Fig. 1: in Schnittdarstellung ein erstes Ausführungsbeispiel einer erfindungsgemäßen Vorrichtung zur Übertragung von Drehmomenten sowie in abgebrochener Darstellung zwei Maschinenteile, zwischen denen Drehmomente übertragen werden sollen,
- Fig. 2: ein zweites Ausführungsbeispiel, welches sich gegenüber dem Ausführungsbeispiel der Fig. 1 nur durch das Ersetzen von Aufnahmen für radial eingreifende Befestigungselemente durch großflächige Anlageflächen zum Verkleben unterscheidet,
- Fig. 3: in einer Darstellung gemäß Fig. 2 ein drittes Ausführungsbeispiel, mit einem kreisringscheibenartig ausgebildeten Flanschabschnitt,
- Fig. 4: das Ausführungsbeispiel gemäß Fig. 1 in Einzeldarstellung,
- Fig. 5: ein viertes Ausführungsbeispiel, welches ähnlich dem Ausführungsbeispiel gemäß Fig. 3 ausgebildet ist, aber einen stufenartigen Versatz aufweist,
- Fig.6: ein fünftes Ausführungsbeispiel der erfindungsgemäßen Vorrichtung, welches eine Trichterform ähnlich dem Ausführungsbeispiel der Fig. 2 aufweist, dessen Flanschabschnitt jedoch im Querschnitt eine Wellenlinienform aufweist,
- Fig. 7: ein sechstes Ausführungsbeispiel in einer Ansichtsdarstellung etwa gemäß Ansichtspfeil VII in Fig. 3, welches zusätzlich acht in Umfangsrichtung verteilt, äquidistant angeordnete Ausnehmungen aufweist,
- Fig.8: eine Reihenanordnung von vier erfindungsgemäßen Membrankupplungen zu einer doppelkardanischen Gelenkanordnung,
- Fig. 9: in Draufsicht ein Ausführungsbeispiel eines erfindungsgemäßen Ringkörpers,
- Fig. 10: den Ringkörper gemäß Fig. 9 in Schnittdarstellung etwa entlang der Schnittlinie A-A,
- Fig. 11: den Ringkörper der Fig. 9 in perspektivischer Schrägansicht,
- Fig. 12: ein weiteres Ausführungsbeispiel einer erfindungsgemäßen Vorrichtung mit einer im wesentlichen trichterartigen Grundform, bei der der Ringkörper gemäß Fig. 9 mit angespritzt ist,
- Fig. 13: die Vorrichtung gemäß Fig. 12 in Unteransicht, und
- Fig. 14: die Vorrichtung gemäß Fig. 12 in einer schematischen Schnittdarstellung mit daran befestigtem, als Welle ausgebildeten Maschinenteil.

Bereits an dieser Stelle sei darauf hingewiesen, dass gleiche oder vergleichbare Elemente oder Bereiche bei den unterschiedlichen Ausführungsbeispielen der Einfachheit halber mit gleichem Bezugszeichen, teilweise durch Hinzufügung kleiner Buchstaben oder eines Apostrophs bezeichnet sind.

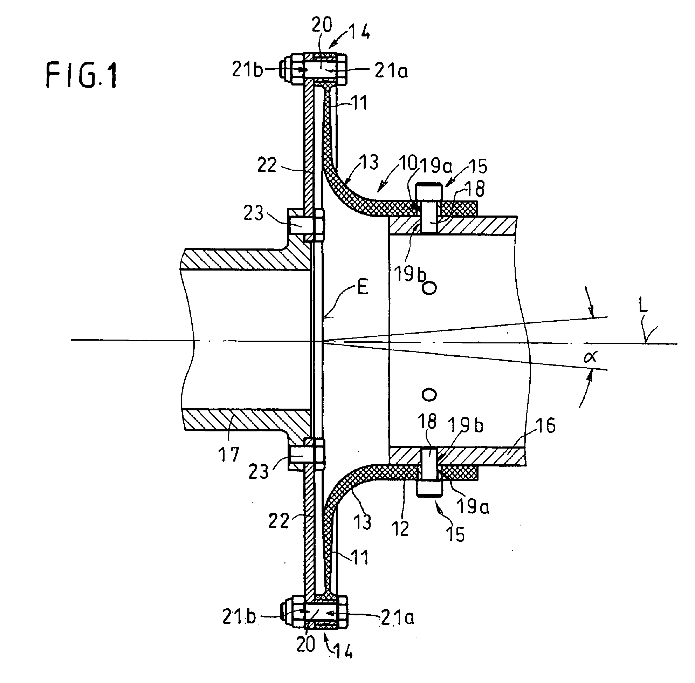

Die in den Figuren in ihrer Gesamtheit mit 10 bezeichnete Vorrichtung zur Übertragung von Drehmomenten, die im folgenden der Einfachheit halber als Membran-Kupplung 10 bezeichnet wird, wird üblicherweise unmittelbar oder mittelbar zwischen zwei Maschinenteilen angeordnet. Fig. 1 zeigt ein erstes Ausführungsbeispiel einer erfindungsgemäßen Membran-Kupplung 10 im eingebauten Zustand. Es wird deutlich, dass die Membran-Kupplung 10 einen Flanschabschnitt 11 aufweist, der im wesentlichen entlang einer Ebene E orientiert ist. Das Ausführungsbeispiel der Membran-Kupplung 10 gemäß Fig. 1 weist eine im wesentlichen trichterförmige Grundform auf, derart, dass sich an den Flanschabschnitt 11, der nach Art einer Kreisringscheibe ausgebildet ist, ein im Querschnitt kreiszylindrisches, hohles Anschlussstück 12 anschließt. Anschlussstück 12 und Flanschabschnitt 11 sind über einen Übergangsbereich 13, der im Querschnitt gekrümmt ausgebildet ist, miteinander verbunden.

Der Membran-Kupplung 10 ist ein erster, radial äußerer Kraftankopplungsbereich 14 und ein zweiter, radial innerer Kraftankopplungsbereich 15 zugeordnet.

Beide Kraftankopplungsbereiche 14, 15 bestehen beim Ausführungsbeispiel der Fig. 1 jeweils aus im wesentlichen rahmenartigen, ringförmigen Verstärkungsbereichen. Den Kraftankopplungsbereichen 14 und 15 sind jeweils Aufnahmen 19a bzw. 21a zur Aufnahme von radialen Befestigungselementen 18 oder axialen Befestigungselementen 20 zugeordnet.

Beim Ausführungsbeispiel gemäß Fig. 1 ist die Membran-Kupplung 10 im Bereich des Anschlussstückes 12 mittels einer Vielzahl radialer Befestigungselemente 18 mit dem ersten Maschinenteil 16 verbunden. Hierzu durchgreifen die radialen Befestigungselemente 18 miteinander fluchtende Aufnahmen 19a und 19b in dem Anschlussstück 12 sowie in dem ersten Maschinenteil 16.

Das zweite Maschinenteil 17 ist mit einer Vielzahl axialer Befestigungselemente 23 mit einem kreisringscheibenartig ausgebildeten Flansch 22 verbunden. Der Flansch 22 weist an seinem radial äußeren Umfangsbereich eine Mehrzahl von Aufnahmen 21b auf, die mit den Aufnahmen 21a des Flanschabschnittes 11 fluchten. Gemeinsam werden die Aufnahmen 21a und 21b von axialen Befestigungsmitteln 20 durchgriffen, die auf geeignete Weise, beispielsweise mit einer schematisch angedeuteten Mutter, gehalten werden können.

Die erfindungsgemäße Membran-Kupplung 10 ermöglicht durch ihren Einbau zwischen den beiden Maschinenteilen 16 und 17 eine gewisse Winkelbeweglichkeit zwischen den beiden Gelenkwellen 16, 17. So ist beispielsweise das erste Maschinenteil 16 relativ zu einer feststehenden Längsachse L des zweiten Maschinenteiles 17 um den übertrieben groß dargestellten Winkel α auslenkbar. Der übertrieben groß dargestellte Winkel α soll lediglich eine gewisse Auslenkung verdeutlichen. Typischerweise werden Auslenkwinkel von α/2 im Bereich von 1° - 2° erreicht.

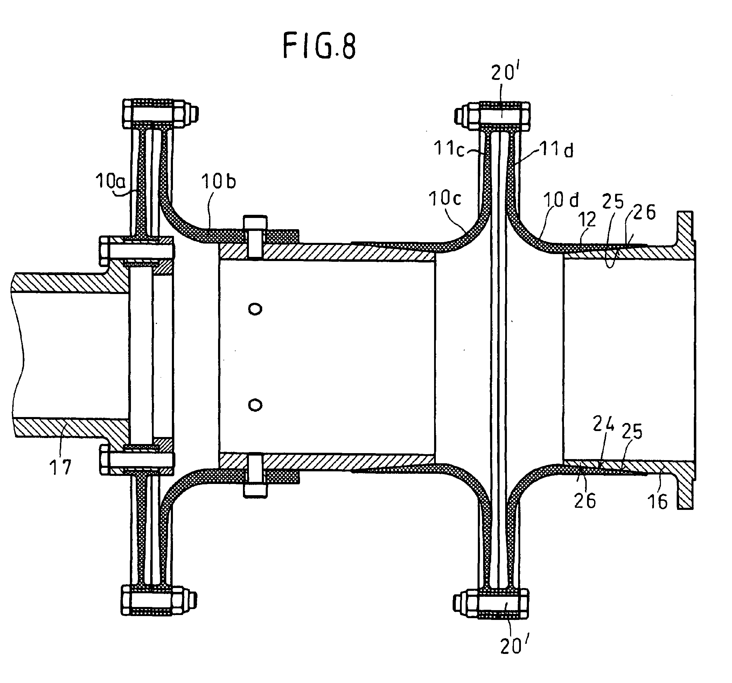

Bei einer seriellen Anordnung mehrerer Membran-Kupplungen 10a, 10b, 10c, 10d, wie dies etwa Fig. 8 als doppelkardanische Gelenkanordnung zeigt, kann die Winkelbeweglichkeit (Auslenkwinkel a/2) selbstverständlich um ein vielfaches erhöht werden.

Die Flexibilität der Membran-Kupplung 10 wird auch beim Ausführungsbeispiel gemäß Fig. 1 nahezu ausschließlich von dem Flanschabschnitt 11 gewährleistet. Bei der trichterartigen Bauform trägt der Übergangsbereich 13 aber selbstverständlich mit zu der Flexibilität bei.

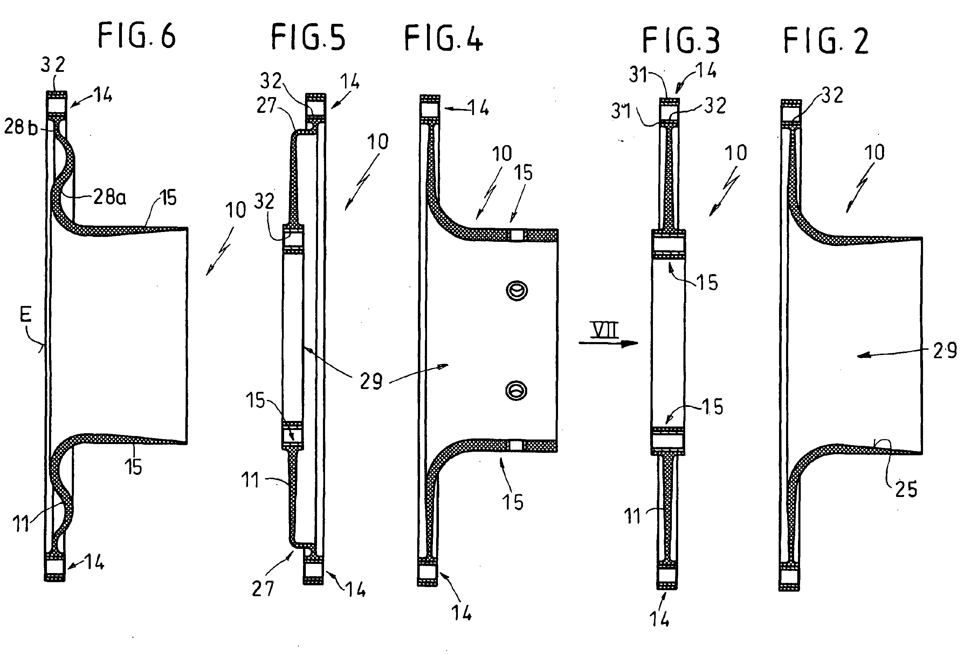

Die Fig. 2 zeigt ein gegenüber dem Ausführungsbeispiel der Fig. 1 geringfügig verändertes Ausführungsbeispiel, bei dem Aufnahmen 19a für radiale Befestigungselemente 18 im Bereich des Anschlussstückes 12 nicht vorgesehen sind. Stattdessen läuft das Anschlussstück 12 zu seinem freien Ende hin konisch, spitz zu und dient dem Anschluss an ein entsprechendes, in Fig. 8 beispielsweise dort ganz rechts dargestelltes entsprechend geformtes erstes Maschinenteil 16. Die Verbindung zwischen dem ersten Maschinenteil 16 und der Membran-Kupplung 10 wird in einem solchen Falle üblicherweise durch eine Klebung erreicht, die in Fig. 8 schematisch mit dem Bezugszeichen 24 bezeichnet ist und üblicherweise die einander zugewandten Anlageflächen 25 der Vorrichtung 10 und die Anlageflächen 26 des ersten Maschinenteils 16 umfasst. Selbstverständlich bestehen auch andere Möglichkeiten Anschlussstück 12 und Maschinenteil 16 miteinander zu verbinden, beispielsweise durch Schweißen etc.

Das Ausführungsbeispiel der Fig. 3 unterscheidet sich von den Ausführungsbeispielen der Fig. 1 und 2 im wesentlichen durch eine kreisringscheibenartig ausgebildete Form. Der Flanschabschnitt 11 ist hier nahezu vollständig entlang einer gemeinsamen Ebene E ausgerichtet, läuft jedoch von seinem radial inneren Umfangsbereich (zweiter Kraftankopplungsbereich 15) hin zu seinem radial äußeren zweiten Kraftankopplungsbereich 14 geringfügig konisch zu.

Die Ausbildung des Flanschabschnittes im Querschnitt ist dabei vorteilhafterweise nach dem Gesetz gleicher Schubspannungen konzipiert.

Bei einem weiteren, dem Ausführungsbeispiel der Fig. 3 sehr nahe kommenden Ausführungsbeispiel gemäß Fig. 5 ist dem Flanschabschnitt 11 ein stufenartiger Versatz 27 zugeordnet. Dies ermöglicht eine axial beabstandete Anordnung des ersten Kraftankopplungsbereiches 14 und des zweiten Kraftankopplungsbereiches 15.

Bei dem Ausführungsbeispiel der Fig. 6 ist wiederum eine trichterartige Form dargestellt, wobei hier der Flanschabschnitt 11 zwar im wesentlichen entlang einer Ebene E angeordnet ist, aber im Querschnitt eine Wellenform aufweist. Bei Betrachtung des Querschnittes des Flanschabschnittes 11 weist der Flanschabschnitt 11 zwei Wendepunkte 28a, 28b oder Wendebereiche auf, solche Stellen also, an denen die Krümmung des Flanschabschnittes, bei Betrachtung des Querschnitts, eine Änderung erfährt. Auch hier ist festzustellen, dass der Flanschabschnitt 11 sich von seinem radial inneren Ende zu seinem radial äußeren Ende 15 hin verjüngt.

Die Vielzahl der Ausführungsbeispiele verdeutlicht, dass die Erfindung sowohl bei im wesentlichen trichterartigen Membran-Kupplungen 10 als auch bei im wesentlichen kreisringscheibenartigen Membran-Kupplungen mit oder ohne Versatz Anwendung findet. Dargestellt sind darüber hinaus grundsätzlich solche Membran-Kupplungen, die eine zentrale Ausnehmung 29 aufweisen. Eine derartige Ausnehmung 29 ist zwar vorteilhaft, jedoch nicht unbedingt in allen Anwendungsfällen erwünscht. Es kann daher auch vorstellbar sein, dass eine nahezu vollflächige, kreisscheibenartige Ausbildung des Flanschabschnittes 11 vorgesehen ist.

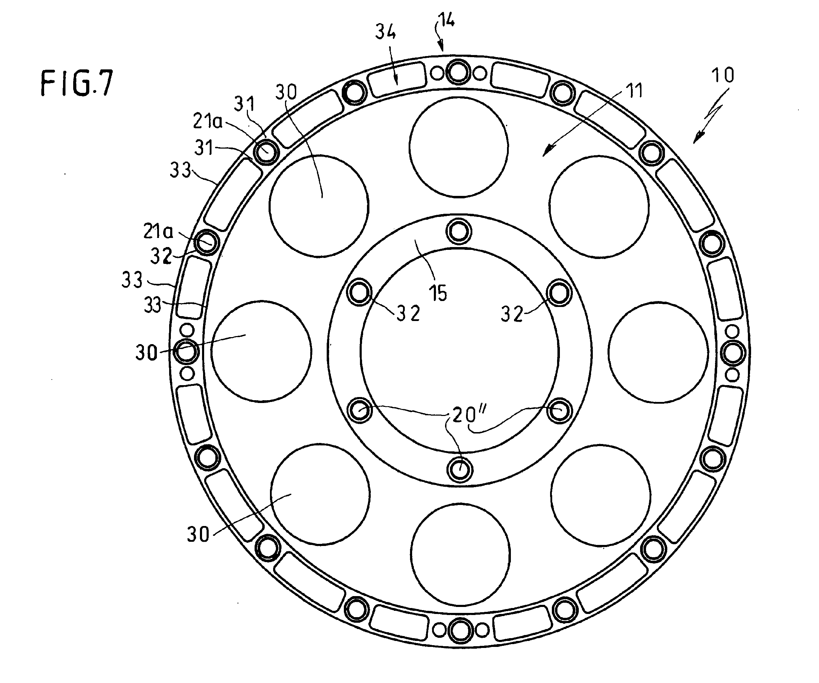

Fig. 7 zeigt ein weiteres Ausführungsbeispiel einer Membran-Kupplung 10, die im wesentlichen dem Ausführungsbeispiel der Fig. 3 entspricht. Zusätzlich sind hier nunmehr noch insgesamt acht, in Umfangsrichtung äquidistant angeordnete Ausnehmungen 30 vorgesehen. Die Ausnehmungen 30 werden bei der Herstellung des als Kunststoff-Spritzguss-Teil ausgebildeten Flanschabschnittes 11 unmittelbar mit eingearbeitet, so dass keine nachfolgende Materialbearbeitung der Membran-Kupplung 10 nach dem Herstellungsprozess notwendig ist. Derartige Ausnehmungen können beispielsweise vorgesehen werden, um die Flexibilität der Membran-Kupplung 10 zu erhöhen.

Die Ausführungsbeispiele der Fig. 1 bis 8 haben gemeinsam, daß jeweils ein radial innerer Kraftankopplungsbereich 15 und ein radial äußerer Kraftankopplungsbereich 14 vorgesehen sind. Es ist dabei prinzipiell unerheblich, an welchem Kraftankopplungsbereich die Krafteinleitung und an welchem Kraftankopplungsbereich die Kraftausleitung erfolgt, da die Membran-Kupplung 10 selbstverständlich bi-direktional Drehmomente übertragen kann.

Die Kraftankopplungsbereiche 14, 15 müssen dabei nicht zwingend radial miteinander fluchten (Fig. 3), sondern es kann durchaus auch vorgesehen sein, wie es das Ausführungsbeispiel der Fig. 1 und 4 zeigt, daß die Kraftabkopplungsbereiche 14, 15 axial voneinander beabstandet sind.

Darüber hinaus sind die Ausführungsbeispiele auch derart beliebig miteinander kombinierbar, daß die Kraftankopplungsbereiche nicht zwingend mittels gesonderter Befestigungselemente 18, 20, 20' mit entsprechenden Maschinenteilen 16, 17 verbunden werden müssen, sondern daß dies auch durch andere Befestigungsarten, wie Klebung, Verschweißung etc. gleichermaßen möglich ist.

Schließlich wird darauf hingewiesen, daß die Membran-Kupplung 10 nicht unmittelbar an einem Maschinenteil 16, 17 befestigt werden muß, sondern auch, wie dies beispielsweise Fig. 8 zeigt, mittelbar über eine oder mehrere weitere Membran-Kupplungen 10 mit dem entsprechenden Maschinenteil 16, 17 verbunden sein kann.

Eine Besonderheit der erfindungsgemäßen Membran-Kupplung 10, die nunmehr in einem Kunststoff-Spritzgießverfahren hergestellt wird, besteht darin, dass die Kraftankopplungsbereiche 14, 15 unmittelbar mit angespritzt werden können. Beim Ausführungsbeispiel gemäß Fig. 7 wird erkennbar, daß die beiden Kraftankopplungsbereiche 14, 15 eine ringartige Rahmenstruktur darstellen, die das radial äußere und das radial innere Ende des Flanschabschnittes 11 ausbilden. Beim Ausführungsbeispiel der Fig. 7 sind am inneren Kraftankopplungsbereich 15 sechs Aufnahmen 20" für axiale Befestigungsmittel und beim äußeren Kraftankopplungsbereich 14 sind sechzehn Aufnahmen 21a für axiale Befestigungsmittel 20 vorgesehen. Die Aufnahmen 21a sind äquidistant voneinander beabstandet und von im Querschnitt gemäß Fig. 3 verstärkten Werkstoffbereichen 31 umgeben. Die Aufnahmen werden beispielsweise von metallischen Buchsen 32 gebildet, die z.B. auf ihrer Außenumfangsseite mit einer Rädelung versehen sind. Diese metallischen Aufnahmebuchsen 32 sind unmittelbar mit umspritzt, so daß ein besonders guter Halt an der Membran-Kupplung 10 gewährleistet ist.

Die metallischen Buchsen 32 sind jeweils außenseitig, mit Ausnahme der Stirnseiten, von den verstärkten Werkstoffbereichen 31 umgeben, die sich zu jeweils einer in Umfangsrichtung benachbarten Buchse 32 durch langgestreckte Werkstoffbereiche 33 fortsetzen. Jeweils zwei langgestreckte Werkstoffbereiche bilden dabei zwischen sich fächerartige Kammern 34.

Durch das Bereitstellen von einstückig-stoffschlüssig an den eigentlichen Flanschabschnitt 11 mit angeformten, vorliegend mit angespritzten, ringförmigen Kraftankopplungsbereichen 14, 15 wird die Stabilität und Belastbarkeit, sowie gleichermaßen die Lebenserwartung einer erfindungsgemäßen Membran-Kupplung 10 weiter erhöht.

Die verstärkten Werkstoffbereiche 31 und 33 sorgen für eine optimale Krafteinleitung bzw. Kraftausleitung in den Kraftankopplungsbereichen 14, 15, wodurch eine Beschädigung der Membran-Kupplung 10 praktisch ausgeschlossen wird. Außerdem stellen die verstärkten Werkstoffbereiche 31, 33 bei Bedarf Anlageflächen für das benachbart anzubringende Bauelement, also entweder eine weitere Membran-Kupplung 10 oder ein Maschinenteil 16, 17 bereit.

Die gesamte Membran-Kupplung 10, also im Falle einer trichterförmigen Ausbildung der gesamte Trichter, oder im Falle einer der Form einer Kreisringscheibe angenäherten Bauform einer Membran-Kupplung 10 dieser Flanschabschnitt 11 sind gemäß der Erfindung als ein einziges, durchgehend homogenes Werkstück ausgebildet. Bei den Ausführungsbeispielen sind die Kraftankopplungsbereiche 14, 15 ebenfalls integraler Bestandteil dieses Werkstückes.

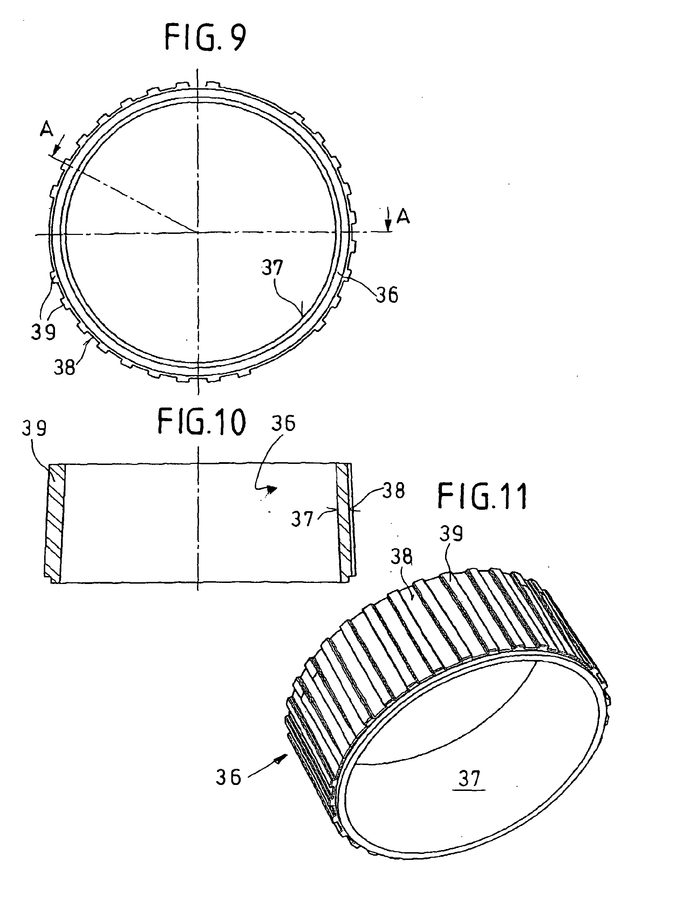

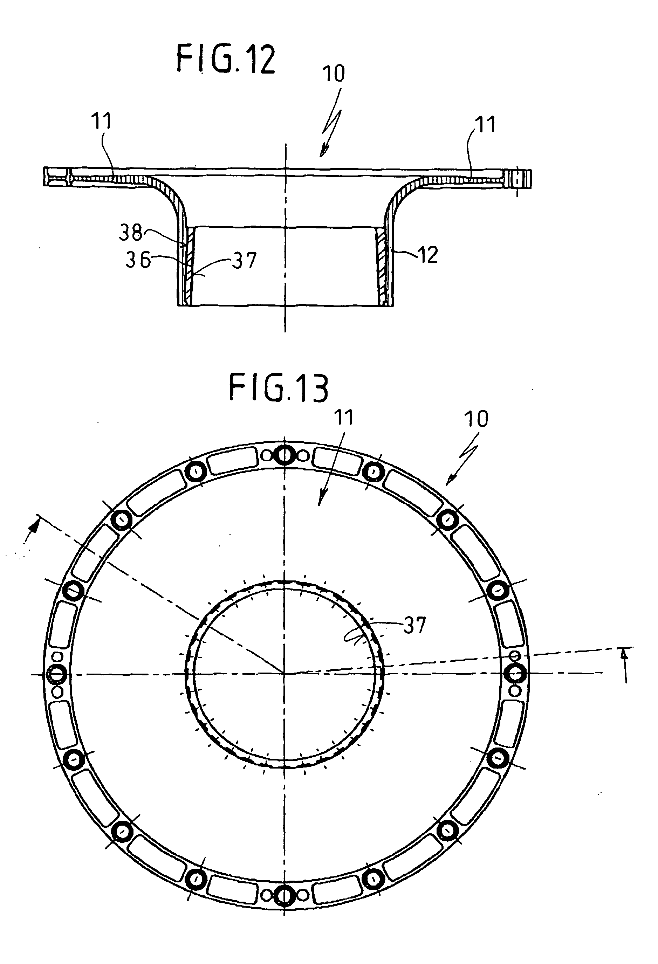

Ein weiteres Ausführungsbeispiel einer erfindungsgemäßen Vorrichtung soll nun anhand der Figuren 9 bis 14 erläutert werden:

Fig. 9 zeigt einen Ringkörper 36, der als gesondertes, vorgefertigtes Bauteil hergestellt wird. Es handelt sich dabei beispielsweise um einen Ringkörper 36 aus Metall oder aus Kunststoff. Auch der Ringkörper 36 kann als Kunststoff-Spritzgussteil hergestellt sein. Entscheidend ist, dass der Ringkörper 36 aus einem anderen Werkstoff besteht als der Flanschabschnitt 11, um eine geeignete Kontakt-Klebefläche bereitzustellen.

Der Ringkörper 36 weist gemäß den Figuren 9 bis 11 einen im wesentlichen kreisförmigen Querschnitt auf, so dass die Innenumfangsfläche 37 einer Kreisbahn folgt. Die Mantelfläche 38 ist mit einer Vielzahl von Rippen 39 oder Stegen versehen, die eine axiale Länge aufweisen, die der axialen Länge des Ringkörpers 36 entspricht.

Der Ringkörper 36 dient zu einer verbesserten und vereinfachten Befestigung der Vorrichtung 10 an einem Maschinenteil 16, insbesondere an einer Welle.

Hierzu wird zunächst die Vorrichtung 10 derart hergestellt, dass der Ringkörper 36 in eine Spritzgießform eingelegt wird und anschließend umspritzt wird. Der Flanschabschnitt 11 wird bei diesem Spritzvorgang selbstverständlich mitgebildet, so dass dessen Herstellung und dessen Befestigung an dem Ringkörper 36 zugleich erfolgt. Diese Art der Verbindung ist besonders einfach und besonders sicher. Der Ringkörper 36 und die den Flanschabschnitt 11 aufweisende Vorrichtung 10 bilden auf diese Weise ein einstückiges Bauteil. Der Ringkörper 36 ist vorteilhafterweise auf seiner gesamten Mantelfläche 38 umspritzt, so dass eine besonders vorteilhafte Kraftleitung innerhalb der Vorrichtung 10 erfolgen kann. Die Rippen 39 sorgen dabei für einen besonders guten Formschluss in Umfangsrichtung.

Der Ringkörper 36 besteht aus einem anderen Werkstoff als der Flanschabschnitt 11, beispielsweise aus Metall oder aus einem besonderen Kunststoff. Die Innenumfangsfläche 37 des Ringkörpers 36 kann mit der Mantelfläche 40 der Welle 16 auf herkömmliche Weise unter Verwendung kommerziell erhältlicher Klebstoffe verklebt werden.

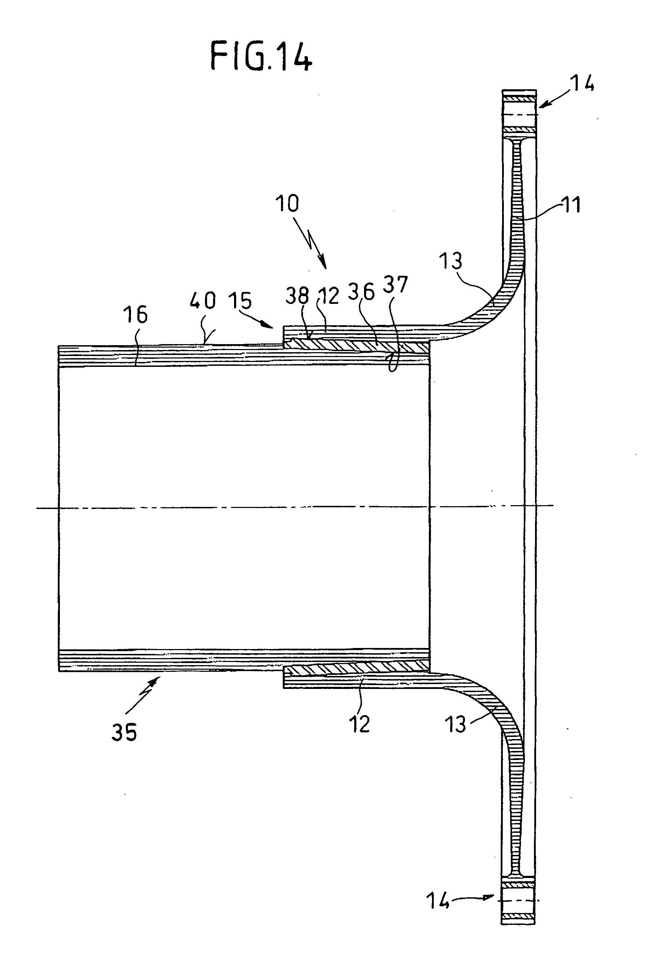

Eine Kupplungsanordnung 35, umfassend eine Vorrichtung 10 mit einem flexiblen Flanschabschnitt 11 und einem Ringkörper 36 sowie eine Welle 16, an der der Ringkörper 36, mittels eines Klebstoffes befestigt ist, zeigt Fig. 14.

Die in Fig. 14 dargestellte Kupplungsanordnung 35 umfasst ein als Welle ausgebildetes Maschinenteil 16, welches durch maschinelles Umwickeln eines Kernes mit harzgetränkten Roving-Bündeln hergestellt ist. Es sei an dieser Stelle darauf hingewiesen, dass auch die in den Figuren 1 und 8 dargestellten Maschinenteile 16 beziehungsweise 17 aus einem entsprechenden Werkstoff bestehen können. Gleichermaßen können auch die in den Figuren 2 und 6 dargestellten Ausführungsbeispiele der Vorrichtung 10 mit einer entsprechend hergestellten Welle 16 verklebt werden.

Lediglich der Vollständigkeit halber sei angemerkt, dass der Querschnitt des Ringkörpers 36 auf den Querschnitt des Maschinenteiles 16 abgestimmt ist. Als besonders vorteilhaft hat sich ein im wesentlichen kreisringförmiger Querschnitt der Welle 16 mit einer kreiszylindrischen Mantelfläche 40 und einer entsprechenden kreiszylindrischen Innenumfangsfläche 37 des Ringkörpers 36 herausgestellt.

Bei einer weiteren Ausführungsform der Erfindung ist der Ringkörper 36 nicht vollständig, sondern nur teilweise umspritzt. Es besteht beispielsweise die Möglichkeit, den Ringkörper lediglich auf einem Teil seiner axialen Länge zu umspritzen, so dass in dem nicht umspritzten Axialabschnitt des Ringkörpers Aufnahmen für Befestigungsmittel angeordnet werden können. Der Ringkörper kann mit der Welle auf diese Weise auch verstiftet, vernietet oder verschraubt werden.

Beispielsweise kann bei einer aus Metall bestehenden Welle 16 die Verbindung mit einem metallenen Ringkörper 36 durch eine Vielzahl, z.B. radialer Befestigungsschrauben erfolgen, ähnlich dem Ausführungsbeispiel der Fig. 4. Der Vorteil liegt, wenn der Ringkörper ebenfalls aus Metall besteht, darin, daß der metallenen Welle eine Gegenfläche aus einem ähnlichen oder identischen Werkstoff gegenüberliegt, so dass eine optimale Befestigung der beiden Bauteile aneinander möglich ist, und die Flächen z.B. auf vorteilhafte Weise gegeneinander verspannt werden können.

Es sei an dieser Stelle jedoch ausdrücklich darauf hingewiesen, dass auch solche Ringkörper 36, die auf ihrer Mantelfläche vollständig umspritzt sind, durch andere Befestigungsarten als Verkleben, beispielsweise durch gesonderte Befestigungsmittel, wie Schrauben, Stifte, Nieten od. dgl., mit der Welle verbunden werden können.

## Patentansprüche

1. Vorrichtung (10) zur elastischen, drehstarren Übertragung von Drehmomenten zwischen zwei Maschinenteilen (16, 17), mit einem ersten Kraftankopplungsbereich (14), z.B. einer antriebsseitigen Krafteinleitungsstelle, und einem zweiten Kraftankopplungsbereich (15), z.B. einer abtriebsseitigen Kraftausleitungsstelle, und mit einem insbesondere kreisringscheibenartigen, zur Bereitstellung einer Winkelbeweglichkeit (α/2) zwischen den Kraftankopplurigsbereichen (14, 15) flexibel ausgebildeten Flanschabschnitt (11), wobei die beiden Kraftankopplungsbereiche (14, 15) dem Flanschabschnitt (11) zugeordnet sind und in Umfangsrichtung des Flanschabschnittes, radial voneinander beabstandet, verlaufen, **dadurch gekennzeichnet, dass** der Flanschabschnitt (11) ein durchgehend homogenes Werkstück darstellt, welches vollständig aus einem mittels eines Kunststoff-Spritzgießverfahrens bearbeitbaren Werkstoff besteht, und dass der Flanschabschnitt einstückig als Kunststoff-Spritzgussteil ausgebildet ist.

2. Vorrichtung nach Anspruch 1, **dadurch gekennzeichnet, dass** der Werkstoff ein verstärkungsfaserfreier Kunststoff ist.

3. Vorrichtung nach Anspruch 1, **dadurch gekennzeichnet, dass** der Werkstoff ein Kunststoff ist, dem Verstärkungsfasern, insbesondere Kurzfasern, homogen verteilt beigemischt sind.

4. Vorrichtung nach Anspruch 3, **dadurch gekennzeichnet, dass** die Verstärkungsfasern von Glasfasern und/oder von Kohlefasern und/oder aus Kevlar und/oder aus Twaron und/oder aus Aramid gebildet sind.

5. Vorrichtung nach einem der vorangegangenen
Ansprüche, **dadurch gekennzeichnet, dass** wenigstens einer der beiden Kraftankopplungsbereiche (14, 15), vorzugsweise beide Kraftankopplungsbereiche, unmittelbar an dem Flanschabschnitt angeordnet sind.

6. Vorrichtung nach Anspruch 5, **dadurch gekennzeichnet, dass** wenigstens einer der beiden Kraftankopplungsbereiche, vorzugsweise beide Kraftankopplungsbereiche, einstückig-stoffschlüssig an den Flanschabschnitt (11) angeformt ist und als integraler Bestandteil des Werkstückes mit angespritzt ist.

7. Vorrichtung nach einem der vorangegangenen Ansprüche, **dadurch gekennzeichnet, dass** wenigstens einer der beiden Kraftankopplungsbereiche (14, 15), vorzugsweise beide Kraftankopplungsbereiche, im wesentlichen ringförmig ausgebildet ist.

8. Vorrichtung nach einem der vorangegangenen Ansprüche, **dadurch gekennzeichnet, dass** an wenigstens einem der beiden Kraftankopplungsbereiche (14, 15) eine Vielzahl von Befestigungselementen (18, 20, 20', 20") befestigbar ist.

9. Vorrichtung nach Anspruch 8, **dadurch gekennzeichnet, dass** wenigstens einem der beiden Kraftankopplungsbereiche (14, 15) Aufnahmen (19a, 21 a) für die Befestigungselemente zugeordnet sind.

10. Vorrichtung nach Anspruch 9, **dadurch gekennzeichnet, dass** die Aufnahmen als insbesondere metallische Buchsen (32) ausgebildet sind, die als integraler Bestandteil des Werkstückes mit umspritzt sind.

11. Vorrichtung nach einem der vorangegangenen Ansprüche, **dadurch gekennzeichnet, dass** der Flanschabschnitt im wesentlichen nach Art einer Kreisscheibe, insbesondere nach Art einer Kreisringscheibe, ausgebildet ist und sich im wesentlichen entlang einer Ebene (E) erstreckt.

12. Vorrichtung nach Anspruch 11, **dadurch gekennzeichnet, dass** der Flanschabschnitt im Querschnitt eine Wellenform aufweist.

13. Vorrichtung nach einem der vorangegangenen Ansprüche, **dadurch gekennzeichnet, dass** die beiden Kraftankopplungsbereiche (14, 15) axial von einander beabstandet sind und dem Flanschabschnitt ein zylindrisches, insbesondere kreiszylindrisches, Anschlußstück (12) zugeordnet ist, welches integraler Bestandteil des Werkstückes ist und mit angespritzt ist.

14. Vorrichtung nach einem der vorangegangenen Ansprüche, **dadurch gekennzeichnet, dass** in dem Flanschabschnitt (11) Aufnahmen (30) zur Erhöhung der Flexibilität belassen sind.

15. Vorrichtung nach einem der vorangegangenen Ansprüche, **dadurch gekennzeichnet, dass** dem radial inneren Kraftankopplungsbereich (15) zur Befestigung der Vorrichtung (10) an einem Maschinenteil (16) ein Ringkörper (36) zugeordnet ist, der als gesondertes, vorgefertigtes Bauteil ausgebildet ist.

16. Vorrichtung nach Anspruch 15, **dadurch gekennzeichnet, dass** der Ringkörper (36) von dem Werkstoff umspritzt ist.

17. Vorrichtung nach Anspruch 15 oder 16, **dadurch gekennzeichnet, dass** die Vorrichtung (10) mit dem Flanschabschnitt (11) und dem Ringkörper (36) eine einstückige Baueinheit (Fig. 12) ausbildet.

18. Vorrichtung nach einem der Ansprüche 15 bis 17, **dadurch gekennzeichnet, dass** der Ringkörper (36) aus einem anderen Material besteht, als der Flanschabschnitt (11), insbesondere aus einem anderen Kunststoff oder aus Metall.

19. Vorrichtung nach einem der Ansprüche 15 bis 18, **dadurch gekennzeichnet, dass** auf der Mantelfläche (38) des Ringkörpers radiale Vorsprünge (39), insbesondere Rippen, angeordnet sind.

20. Kupplungsanordnung (35), umfassend ein als Welle (16) ausgebildetes Maschinenteil zur Übertragung von Drehmomenten, an deren zumindest einem Ende eine Vorrichtung (10) nach einem der vorangegangenen Ansprüche, angeordnet ist, die einen insbesondere kreisringscheibenartigen, zur Bereitstellung einer Winkelbeweglichkeit flexiblen Flanschabschnitt (11) aufweist, wobei der Flanschabschnitt durchgehend homogen als Kunststoff-Spritzgussteil ausgebildet ist und einen mitumspritzten, aus einem anderen Werkstoff als der Flanschabschnitt (11) bestehenden Ringkörper (36) aufweist, und wobei der Ringkörper (36) mit dem Maschinenteil (16) verklebt ist.

21. Kupplungsanordnung nach Anspruch 20, **dadurch gekennzeichnet, dass** die Welle im wesentlichen von einem faserverstärktem Kunststoff gebildet ist, dessen Fasern insbesondere eine definierte Orientierung (z.B. 45°) besitzen.

22. Kupplungsanordnung nach Anspruch 21, **dadurch gekennzeichnet, dass** die Fasern in Epoxidharz oder Phenolharz eingebettet sind.

23. Kupplungsanordnung nach Anspruch 20, **dadurch gekennzeichnet, dass** die Welle aus Metall, insbesondere aus Aluminium oder Stahl gebildet ist.

## Claims

1. Device (10) for the flexible, torsionally stiff transmission of torques between two machine parts (16, 17), comprising a first force coupling region (14), for example an input-side force entry point, and a second force coupling region (15), for example an output-side force exit point, and an in particular annular-disk-like flange portion (11) formed flexibly between the force coupling regions (14, 15) in order to provide an angular mobility (α/2) between the force coupling regions (14, 15), wherein the two force coupling regions (14, 15) are associated with the flange portion (11) and extend, spaced radially apart from one another, in peripheral direction of the flange portion, **characterized in that** the flange portion (11) is a continuously homogeneous workpiece, which is made entirely from a material that is processable by means of a plastics injection moulding method, and that the flange portion is formed integrally as a plastic injection moulded part.

2. Device according to claim 1, **characterized in that** the material is a reinforcing-fibre-free plastics material.

3. Device according to claim 1, **characterized in that** the material is a plastics material, in which reinforcing fibres, in particular chopped fibres, are incorporated in a uniformly distributed manner.

4. Device according to claim 3, **characterized in that** the reinforcing fibres are formed by glass fibres and/or by carbon fibres and/or from Kevlar and/or from Twaron and/or from aramide.

5. Device according to one of the preceding claims, **characterized in that** at least one of the two force coupling regions (14, 15), preferably both force coupling regions are disposed directly on the flange portion.

6. Device according to claim 5, **characterized in that** at least one of the two force coupling regions, preferably both force coupling regions are formed integrally cohesively on the flange portion (11) and simultaneously moulded on as an integral component of the workpiece.

7. Device according to one of the preceding claims, **characterized in that** at least one of the force coupling regions (14, 15), preferably both force coupling regions are of a substantially annular construction.

8. Device according to one of the preceding claims, **characterized in that** a plurality of fastening elements (18, 20, 20', 20") are fastenable to at least one of the two force coupling regions (14, 15).

9. Device according to claim 8, **characterized in that** receivers (19a, 21a) for the fastening elements are associated with at least one of the two force coupling regions (14, 15).

10. Device according to claim 9, **characterized in that** the receivers are configured as in particular metal bushes (32), which are simultaneously moulded in as an integral component of the workpiece.

11. Device according to one of the preceding claims, **characterized in that** the flange portion is formed substantially in the style of a circular disk, in particular in the style of an annular disk, and extends substantially along a plane (E).

12. Device according to claim 11, **characterized in that** the flange portion in cross section has an undulating shape.

13. Device according to one of the preceding claims, **characterized in that** the two force coupling regions (14, 15) are spaced axially apart from one another and there is associated with the flange portion a cylindrical, in particular circular-cylindrical, connection piece (12), which is an integral component of the workpiece and is simultaneously moulded on.

14. Device according to one of the preceding claims, **characterized in that** receivers (30) for increasing the flexibility are left in the flange portion (11).

15. Device according to one of the preceding claims, **characterized in that** an annular body (36), which takes the form of a separate, prefabricated component, is associated with the radially inner force coupling region (15) for fastening the device (10) to a machine part (16).

16. Device according to claim 15, **characterized in that** the annular body (36) is encapsulated by the material.

17. Device according to claim 15 or 16, **characterized in that** the device (10) together with the flange portion (11) and the annular body (36) forms an integral constructional unit (Fig. 12).

18. Device according to one of claims 15 to 17, **characterized in that** the annular body (36) is made from a different material to the flange portion (11), in particular from a different plastics material or from metal.

19. Device according to one of claims 15 to 18, **characterized in that** radial projections (39), in particular ribs, are disposed on the lateral surface (38) of the annular body.

20. Coupling arrangement (35), comprising a machine part in the form of a shaft (16) for transmitting torques, on at least one end of which a device (10) according to one of the preceding claims is disposed, which comprises an in particular annular-disk-like flange portion (11) that is flexible in order to provide an angular mobility, wherein the flange portion is configured continuously homogeneously as a plastic injection moulded part and comprises a simultaneously moulded-in annular body (36) made from a different material to the flange portion (11), and wherein the annular body (36) is bonded to the machine part (16).

21. Coupling arrangement according to claim 20, **characterized in that** the shaft is formed substantially from a fibre-reinforced plastics material, the fibres of which in particular have a defined orientation (for example 45°).

22. Coupling arrangement according to claim 21, **characterized in that** the fibres are embedded in epoxy resin or phenolic resin.

23. Coupling arrangement according to claim 20, **characterized in that** the shaft is formed from metal, in particular from aluminium or steel.

## Revendications

1. Dispositif (10) pour la transmission élastique et rigide en torsion de couples entre deux pièces de machine (16, 17), avec une première zone de couplage de force (14), par exemple, un point d'application de force, côté entraînement, et une deuxième zone de couplage de force (15), par exemple, un point de transmission de force, côté sortie, et avec une section de bride (11) conçue de manière souple, en particulier de type disque en couronne circulaire, pour mise à disposition d'une mobilité d'angle (α/2) entre les zones de couplage de force (14, 15), les deux zones de couplage de force (14, 15) étant affectées à la section de bride (11), et espacées radialement l'une de l'autre dans le sens périphérique de la section de bride, **caractérisé en ce que** la section de bride (11) représente une pièce à travailler homogène de bout en bout, laquelle est entièrement composée d'un matériau pouvant être travaillé par un procédé de moulage par injection de matière plastique, et **en ce que** la section de bride est conçue monobloc en tant que pièce moulée par injection de matière plastique.

2. Dispositif selon la revendication 1, **caractérisé en ce que** le matériau est une matière plastique sans fibre de renforcement.

3. Dispositif selon la revendication 1, **caractérisé en ce que** le matériau est une matière plastique à laquelle sont mélangées, réparties de manière homogène, des fibres de renforcement, en particulier des fibres courtes.

4. Dispositif selon la revendication 3, **caractérisé en ce que** les fibres de renforcement sont formées de fibres de verre et/ou de fibres de carbone et/ou en kevlar et/ou en twaron et/ou en aramide.

5. Dispositif selon l'une des précédentes revendications, **caractérisé en ce qu'**au moins une des deux zones de couplage de force (14, 15), de préférence les deux zones de couplage de force, sont disposées contiguës, au niveau de la section de bride.

6. Dispositif selon la revendication 5, **caractérisé en ce qu'**au moins une des deux zones de couplage de force, de préférence les deux zones de couplage de force, est formée d'un seul tenant par liaison de matière au niveau de la section de bride (11) et est injectée conjointement en tant qu'élément constitutif intégral de la pièce à travailler.

7. Dispositif selon l'une des précédentes revendications, **caractérisé en ce qu'**au moins une des deux zones de couplage de force (14, 15), de préférence les deux zones de couplage de force, est conçue essentiellement en forme d'anneau.

8. Dispositif selon l'une des précédentes revendications, **caractérisé en ce qu'**une multitude d'éléments de fixation (18, 20, 20', 20") peut être fixée à au moins une des deux zones de couplage de force (14, 15).

9. Dispositif selon la revendication 8, **caractérisé en ce que** des logements (19a, 21 a) pour les éléments de fixation sont affectés à au moins une des deux zones de couplage de force (14, 15).

10. Dispositif selon la revendication 9, **caractérisé en ce que** les logements sont conçus en tant que douilles (32) en particulier métalliques, qui sont couvertes par injection en tant qu'élément constitutif intégral de la pièce à travailler.

11. Dispositif selon l'une des précédentes revendications, **caractérisé en ce que** la section de bride est conçue essentiellement à la façon d'un disque circulaire, en particulier à la façon d'un disque en couronne circulaire, et **en ce qu'**elle s'étend essentiellement le long d'un plan (E).

12. Dispositif selon la revendication 11, **caractérisé en ce que** la section de bride présente en coupe transversale une forme d'arbre.

13. Dispositif selon l'une des précédentes revendications, **caractérisé en ce que** les deux zones de couplage de force (14, 15) sont espacées axialement l'une de l'autre et **en ce qu'**une pièce de raccordement (12) cylindrique, en particulier cylindrique circulaire, laquelle est élément constitutif intégral de la pièce à travailler et est injectée conjointement, est affectée à la section de bride.

14. Dispositif selon l'une des précédentes revendications, **caractérisé en ce que** des logements (30) sont laissés dans la section de bride (11) pour augmenter la flexibilité.

15. Dispositif selon l'une des précédentes revendications, **caractérisé en ce qu'**un corps annulaire (36), conçu en tant qu'élément constitutif, à part, préalablement fabriqué, est affecté à la zone de couplage de force (15) intérieure, radiale, pour fixer le dispositif (10) à une pièce de machine (16).

16. Dispositif selon la revendication 15, **caractérisé en ce que** le corps annulaire (36) est couvert par injection par le matériau.

17. Dispositif selon la revendication 15 ou 16, **caractérisé en ce que** le dispositif (10) forme avec la section de bride (11) et le corps annulaire (36) une unité de construction monobloc (figure 12).

18. Dispositif selon l'une des revendications 15 à 17, **caractérisé en ce que** le corps annulaire (36) est dans un autre matériau que celui de la section de bride (11), en particulier, dans une autre matière plastique ou en métal.

19. Dispositif selon l'une des revendications 15 à 18, **caractérisé en ce que** des saillies (39) radiales, en particulier des nervures, sont disposées sur la surface d'enveloppe (38) du corps annulaire.

20. Ensemble de couplage (35), comprenant une pièce de machine conçue en tant qu'arbre (16) pour transmission de couples, au niveau duquel au moins d'une extrémité, un dispositif (10) selon l'une des précédentes revendications, est disposé, qui présente une section de bride (11) souple, en particulier de type disque en couronne circulaire, pour mise à disposition d'une mobilité d'angle, la section de bride, homogène de bout en bout, étant conçue en tant que pièce moulée par injection de matière plastique et présentant un corps annulaire (36), couvert conjointement par injection et en un matériau différent de celui de la section de bride (11) et le corps annulaire (36) étant collé avec la pièce de machine (16).

21. Ensemble de couplage selon la revendication 20, **caractérisé en ce que** l'arbre (16) est formé essentiellement d'une matière plastique renforcée par fibres, dont les fibres possèdent en particulier une orientation définie (par exemple 45°).

22. Ensemble de couplage selon la revendication 21, **caractérisé en ce que** les fibres sont noyées dans de la résine époxyde ou de la résine phénolique.

23. Ensemble de couplage selon la revendication 20, **caractérisé en ce que** l'arbre est en métal, en particulier en aluminium ou en acier.
